# EUROPÄISCHE PATENTSCHRIFT

(11) **EP 0 357 115 B1**
(45) Veröffentlichungstag und Bekanntmachung des Hinweises auf die Patenterteilung: **07.12.1994**
(21) Anmeldenummer: 89202018.1
(22) Anmeldetag: 25.07.1989
(51) Int. Cl.: G02F 1/1339

(54) **Verfahren zum Aufbringen von Distanzelementen einer Flüssigkristallzelle und eine Vorrichtung zur Durchführung des Verfahrens**
Method for the application of spacers to a liquid crystal cell and device for carrying out this method
Procédé pour l'application d'éléments d'écartément dans une cellule à cristal liquide et dispositif pour la mise en oeuvre du procédé

(30) Priorität: 29.07.1988 DE 3825842
(43) Veröffentlichungstag der Anmeldung: 07.03.1990
(73) Patentinhaber: Nokia (Deutschland) GmbH, 75175 Pforzheim (DE)
(72) Erfinder: Brosig, Stefan, Dr., D-7000 Stuttgart (DE)

(56) Entgegenhaltungen:
- DE-A- 3 543 204
- JP-A- 6 377 026
- JP-A- 6 396 633
- PATENT ABSTRACTS OF JAPAN, vol. 7, no. 282 (P-243)[1427], 16. Dezember 1983 ; & JP-A-58 156 920
- PATENT ABSTRACTS OF JAPAN, Band 8, Nr. 18 (P-250)[1455], 26. Januar 1984 ; & JP-A-58 176 621
- PATENT ABSTRACTS OF JAPAN, Band 6, Nr. 233 (P-156)[1111], 19. November 1982 ; & JP-A-57 133 433
- PATENT ABSTRACTS OF JAPAN, Band 12, nr. 107 (P-686)[2954], 7. April 1988 ; & JP-A-62 238 531

## Beschreibung

Die Erfindung betrifft ein Verfahren zum Aufbringen von Distanzelementen einer Flüssigkristallzelle gemäß den Merkmalen des Oberbegriffs des Anspruchs 1 und eine Vorrichtung zur Durchführung des Verfahrens gemäß den Merkmalen des Oberbegriffs des Anspruchs 5.

Allgemein bekannte Flüssigkristallzellen weisen zwei Substrate auf, auf denen jeweils transparente Elektroden zur Ansteuerung, eine Isolierschicht und eine Orientierungsschicht aufgebracht sind. Ferner sind Flüssigkristallmaterial und Distanzelemente zwischen den Substraten angeordnet. Die dem Flüssigkristallmaterial abgewandten Seiten der Substrate sind mit je einem Polarisationsfilter versehen. Entlang der Kanten der Substrate ist zwischen den Substraten ein dichter Abschluß angeordnet.

Die Entwicklung solcher Flüssigkristallzellen geht nun dahin, daß immer geringere und genauere Schichtdicken für den Flüssigkristall gefordert werden. Dies begründet sich zum einen dadurch, daß dünnere Flüssigkristalle mit einer geringeren Spannung angesteuert werden und somit die Schaltzeiten der Flüssigkristallzellen reduziert werden können und zum anderen durch die Verwendung neuer Flüssigkristallmaterialien, die eine geringere Schichtdicke erfordern. Durch die Reduzierung der Schichtdicke wird auch die absolute Toleranz der Schichtdicke kleiner.

Es wird daher die Forderung gestellt, daß die Distanzelemente möglichst gleichmäßig verteilt zwischen den Substraten angeordnet sind, wodurch der Abstand zwischen den Substraten und somit die Dicke des Flüssigkristalls möglichst konstant ist.

Der Oberbegriff des Anspruchs 1 bzw. 5 basiert auf dem aus dem Dokument JP-A-57 133 433 bekannten Verfahren bzw. Gerät.

Aus der DE 31 43 707 A1 ist ein Verfahren bekannt, bei dem ein Substrat in einem Raum angeordnet wird, in dem sich Distanzelemente befinden und daß mittels eines Gasstromes die Distanzelemente in dem Raum aufgewirbelt werden, so daß die Distanzelemente nach einer gewissen Zeit homogen über den gesamten Raum verteilt sind und sich nach Beendigung der Gaszuführung auf der Unterseite des Raumes und somit auf dem Substrat absetzen.

Der Nachteil dieses Verfahrens ist, daß sich zusammengebackene Distanzelemente auch durch das Aufwirbeln nicht trennen, und sie sich somit als Gruppe auf dem Substrat ablagern, und daß Distanzelemente, die einen zu großen Durchmesser aufweisen, ebenfalls auf das Substrat kommen, so daß der Abstand zwischen den beiden Substraten aufgrund der Distanzelemente doch unterschiedlich ausfällt.

Der Erfindung liegt nun die Aufgabe zugrunde, ein Verfahren und eine Vorrichtung zur Durchführung des Verfahrens zu schaffen, die gewährleisten, daß der Flüssigkristall einer Flüssigkristallzelle nicht aufgrund zusammengebackener Distanzelemente oder zu großer Distanzelemente ungenau wird.

Die Aufgabe wird bei einem gattungsgemäßen Verfahren durch die kennzeichnenden Merkmale des Anspruchs 1 und bei einer gattungsgemäßen Vorrichtung durch die kennzeichnenden Merkmale des Anspruchs 5 gelöst.

Weitere Ausgestaltungen der Erfindung sind den übrigen Ansprüchen und dem Rest der Beschreibung zu entnehmen.

Zwei Ausführungsbeispiele der Erfindung werden im folgenden beschrieben. Die Figuren 1 bis 3 zeigen:
- Fig. 1: den Querschnitt einer Flüssigkristallzelle,
- Fig. 2: eine erste erfindungsgemäße Vorrichtung und
- Fig. 3: eine zweite erfindungsgemäße Vorrichtung.

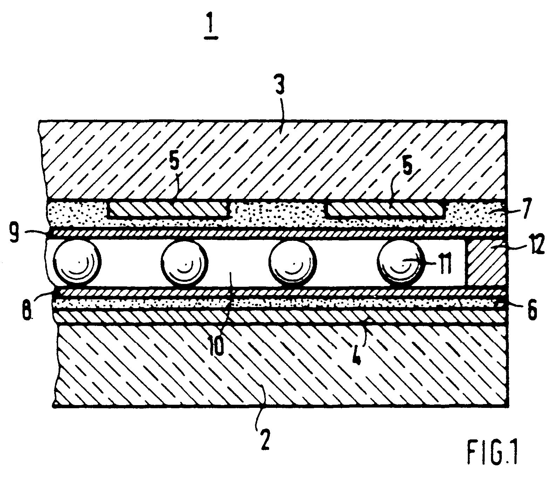

In Fig. 1 ist der Querschnitt einer Flüssigkristallzelle 1 schematisch abgebildet, die nach dem erfindungsgemäßen Verfahren hergestellt ist. Auf zwei parallel angeordneten Substraten 2 und 3 befinden sich auf den sich zugewandten Seiten der Substrate 2, 3 jeweils Scharen von transparenten Elektroden 4 und 5. Die transparente Elektroden 4, 5 und die noch freien Flächen der Substrate 2, 3 sind jeweils mit einer Isolierschicht 6, 7 überzogen, auf denen sich jeweils eine Orientierungsschicht 8, 9 befindet. Der Abstand zwischen den Orientierungsschichten 8, 9 ist durch Distanzelemente 11 gegeben. Zwischen den Orientierungsschichten 8, 9 befindet sich der Flüssigkristall 10, in dem die Distanzelemente 11 eingebettet sind. Entlang der äußeren Kante der Substrate 2, 3 ist zwischen den Orientierungsschichten 8, 9 ein Abschlußelement 12 angebracht, das als Distanzrahmen ausgebildet sein kann.

Die Flüssigkristallzelle 1 wird über die transparenten Elektroden 4, 5 angesteuert. Die Orientierungsschichten 8, 9 geben die Orientierung der Moleküle des Flüssigkristalls 10 vor. Die Größe der Distanzelemente 11 gibt die Dicke des Flüssigkristalls 10 vor.

Bei der Herstellung der Flüssigkristallzelle 1 werden die Substrate 2, 3 zunächst mit den transparenten Elektroden 4, 5, den Isolierschichten 6, 7 und den Orientierungsschichten 8, 9 in bekannter Weise in Dünnschichttechnik versehen. Danach wird das Substrat 2 in der erfindungsgemäßen Vorrichtung 13 zum Aufbringen von Distanzelementen 11 eingebracht und mit den Distanzelementen 11 belegt.

Nach dem Aufbringen der Distanzelemente 11, was in den nächsten Abschnitten noch genauer beschrieben wird, wird das Substrat 2 mit dem Abschlußelement 12 versehen und das Substrat 3 daraufgepreßt. Das Abschlußelement 12 wird mit den Substraten 2, 3 verklebt oder verschweißt oder stellt selbst eine Klebeschicht zwischen den Substraten 2, 3 dar. Die Flüssigkristallzelle (noch leer) wird in einen Rezipienten gebracht, indem sich auch das Flüssigkristallmaterial befindet. Der Rezipient wird evakuiert und die leere Flüssigkristallzelle wird in das Flüssigkristallmaterial getaucht. Anschließend wird der Rezipient belüftet, wodurch das Flüssigkristallmaterial durch eine Öffnung im Abschlußelement 12 in das Innere der Flüssigkristallzelle 1 gedrückt wird.

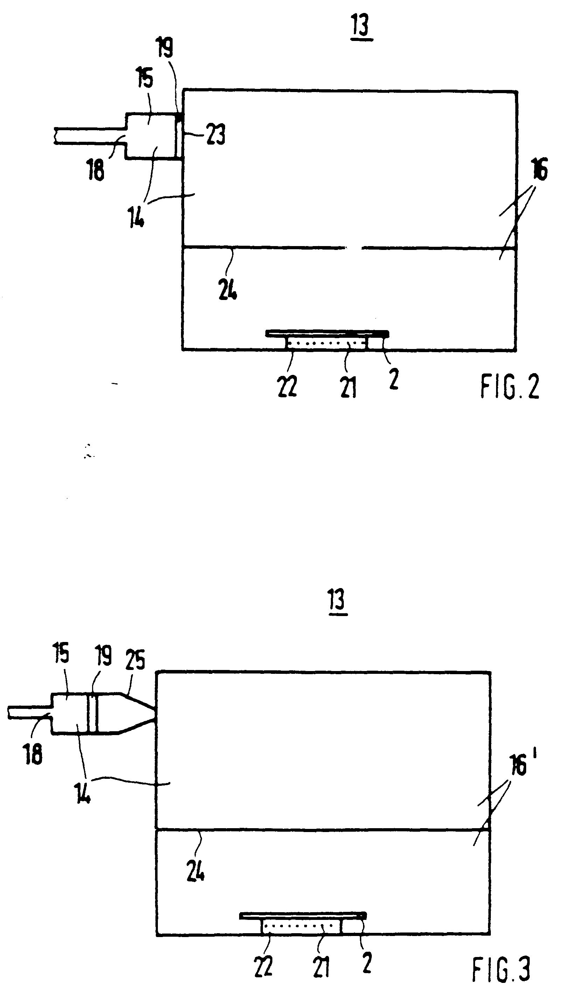

Ein erstes Ausführungsbeispiel der erfindungsgemäßen Vorrichtung 13 zum Aufbringen von Distanzelementen 11 ist in Fig. 2 abgebildet. Die Vorrichtung 13 besteht aus einem Raum 14, der in zwei Kammern, eine erste Kammer 15 und eine zweite Kammer 16 unterteilt ist. Die erste Kammer 15 weist eine Öffnung (nicht abgebildet) zum Einfüllen von Distanzelementen 11, eine Düse 18 für den Einlaß des Gasstromes und eine Wand, die aus einem Mikroporenfilter 19 besteht, auf. Die Distanzelemente 11 können auch mit dem Gasstrom in die erste Kammer 15 eingeführt werden. Die zweite Kammer 16 weist eine Öffnung (nicht abgebildet) zum Einbringen des Substrats 2, einen Sockel 22 zur Aufnahme des Substrats 2 und eine Öffnung 23, in der der mit der ersten Kammer 15 verbundene Mikroporenfilter 19 angeordnet ist, auf. Zwischen dem Mikroporenfilter 19 und dem Sockel 22 ist ein Sieb 24 angebracht. Die Düse 18 ist waagrecht angeordnet und erzeugt in der ersten Kammer 15 eine turbulente Gasströmung, die die in der ersten Kammer 15 befindlichen Distanzelemente 11 aufwirbelt. Der Mikroporenfilter 19 befindet sich in bezug auf die Düse 18 auf der gegenüberliegenden Seite der ersten Kammer 15, so daß die aufgewirbelten Distanzelemente 11 mit dem Gasstrom durch den Mikroporenfilter 19 hindurch in die zweite Kammer 16 gepreßt werden.

Die Distanzelemente 11 verteilen sich nach dem Durchdringen des Mikroporenfilters 19 in der zweiten Kammer 16 und sinken nach Beendigung der Gaszufuhr langsam ab. Nach einer gewissen Zeit ist das Substrat 2 gleichmäßig mit Distanzelementen 11 belegt.

Die Dichte der Distanzelemente 11 auf dem Substrat 2 wird zum einen durch den Druck, mit dem das Gas in die erste Kammer 15 gepreßt wird und zum anderen durch die Dauer des Gaseinlasses in die erste Kammer 15 bestimmt. Das Gas wird zwischen 1 und 20 Sekunden unter einem Druck von ca. 3 bis 5 . 10⁵ Pascal (N/m²) in die erste Kammer eingelassen. Um einen geregelten Gasfluß zu erhalten, sind im Sockel 22 Öffnungen 21 für den Gasauslaß angebracht.

Als einströmendes Gas werden vorzugsweise Luft oder auch inerte Gase, wie N₂ oder Edelgase verwendet. In den Kammern 15 und 16 herrscht in der Regel Normaldruck, der nur ansteigt, wenn der Gaseinlaß durch die Düse 18 erfolgt. Zusätzlich zu den Öffnungen 21 am Sockel 22 für den Gasauslaß können noch weitere Öffnungen zum Gasauslaß an der zweiten Kammer 16 gleichmäßig verteilt angeordnet sein.

Das Sieb 24 befindet sich 25 cm über dem Substrat 2 und hat eine Maschenweite von 100 Mikrometern. Es soll verhindern, daß sich im Bereich des Substrates 2 der zweiten Kammer 16 eine turbulente Gasströmung bildet, die die homogene Verteilung der Distanzelemente 11 auf dem Substrat 2 beeinträchtigen könnte.

Das Substrat 2 ist auf dem Sockel 22 vorzugsweise waagrecht angeordnet, eine leichte Neigung bewirkt auch keine Verschlechterung des Verfahrens.

Als Distanzelemente werden kugelförmige Distanzelemente 11 verwendet, deren Durchmesser je nach gewünschter Dicke des Flüssigkristalls 10 gewählt wird. Bei einem Durchmesser der Distanzelemente 11 von 1,8 Mikrometern kann ein Mikroporenfilter 19 mit einer Porengröße von 5 Mikrometern gewählt werden. Bei dieser Porengröße ist es noch gewährleistet, daß keine zusammengebackenen Distanzelemente 11 in die zweite Kammer 16 gelangen. Als Mikroporenfilter eignen sich Filter aus Polytetrafluoräthylen.

In Fig. 3 ist ein zweites Ausführungsbeispiel einer erfindungsgemäßen Vorrichtung zum Aufbringen von Distanzelementen 11 abgebildet. Es unterscheidet sich vom Ausführungsbeispiel 1 nur dadurch, daß die zweite Kammer 16′ eine Vorkammer 25 aufweist. Diese Vorkammer 25 bildet den Durchgang von der ersten Kammer 15 zum Rest der zweiten Kammer 16′. Sie weist am Mikroporenfilter 19 den gleichen Querschnitt wie die erste Kammer 15 auf und verjüngt sich in Durchflußrichtung des Gases. Durch die Verjüngung wird erreicht, daß das durchfließende Gas beschleunigt wird und sich daher besser im Rest der zweiten Kammer 16′ verteilt.

### Bezugszeichenliste

- 1: Flüssigkristallzelle
- 2: Substrat
- 3: Substrat
- 4: transparente Elektroden
- 5: transparente Elektroden
- 6: Isolierschicht
- 7: Isolierschicht
- 8: Orientierungsschicht
- 9: Orientierungsschicht
- 10: Flüssigkristall
- 11: Distanzelemente
- 12: Abschlußelement
- 13: Vorrichtung zum Aufbringen von Distanzelementen
- 14: Raum
- 15: erste Kammer
- 16: zweite Kammer
- 18: Düse
- 19: Mikroporenfilter
- 21: Öffnung (Gasauslaß)
- 22: Sockel
- 23: Öffnung (Mikroporenfilter)
- 24: Sieb
- 25: Vorkammer

## Patentansprüche

1. Verfahren zum Aufbringen von kugelförmigen Distanzelementen (11) auf ein Substrat (2;3) einer Flüssigkristallzelle (1), bei dem das Substrat (2;3) waagerecht am Boden einer geschlossenen Kammer (16; 16′) angeordnet wird und die Distanzelemente (11) außerhalb dieser Kammer in einem zeitlich begrenzten Gasstrom aufgewirbelt und die im Gasstrom schwebenden Distanzelemente (11) durch eine Öffnung in die Kammer (16, 16′) geleitet werden, in welcher das Substrat (2;3) angeordnet ist, sodaß sich die im Gasstrom schwebenden Distanzelemente (11) nach Abschaltung des Gasstromes am Boden der Kammer (16; 16′) sowie auf dem Substrat (2;3) homogen verteilt absetzen,
**dadurch gekennzeichnet,**
daß die Distanzelemente (11), nachdem sie vom Gasstrom aufgenommen worden sind, vor Eintritt in die Kammer (16, 16′) zusammen mit dem Gasstrom durch einen Mikroporenfilter (19) bewegt werden, dessen Porengröße etwa dem 1,5 - 2,8fachen, vorzugsweise jedoch dem 2,0fachen, des Durchmessers der Distanzelemente (11) entspricht.

2. Verfahren zum Aufbringen von kugelförmigen Distanzelementen nach Anspruch 1,
**dadurch gekennzeichnet,**
daß die Verwirbelung der Distanzelemente (11) in einer der Kammer (16, 16′) vorgeschalteten, ebenfalls geschlossenen Kammer (15) erfolgt.

3. Verfahren zum Aufbringen von kugelförmigen Distanzelementen nach Anspruch 2,
**dadurch gekennzeichnet,**
daß der Druck des Gases, mit welchem dieses in die Kammer (15) gepreßt wird, wenigstens 3 x 10⁵ Pascal beträgt.

4. Verfahren zum Aufbringen von kugelförmigen Distanzelementen nach einem der Ansprüche 1 bis 3,
**dadurch gekennzeichnet,**
daß der Gasstrom wenigstens einige Sekunden andauert.

5. Vorrichtung zum Aufbringen von kugelförmigen Distanzelementen (11) auf ein Substrat einer Flüssigkristallzelle (1) mit einer Kammer (16; 16′), die einen Gaseinlaß, eine Öffnung zum Ablaß des Gases und eine Anordnung zur Aufnahme von Substratplatten (2;3) aufweist, sowie außerhalb der Kammer (16; 16′) und benachbart zum Gaseinlaß eine Anordnung zur Verwirbelung von Distanzelementen (11) aufweist,
**dadurch gekennzeichnet,**
daß in dem Gasstrom, in welchem die Distanzelemente (11) bereits verwirbelt sind, auf dem Weg zur Öffnung (23) der Kammer (16, 16′), vorzugsweise direkt an der Gaseinlaßöffnung (23) ein Mikroporenfilter (19) angeordnet ist, dessen Porengröße etwa dem 1,5-2,8fachen, vorzugsweise jedoch dem 2,0fachen, des Durchmessers der Distanzelemente (11) entspricht.

6. Vorrichtung nach Anspruch 5,
**dadurch gekennzeichnet,**
daß der Kammer (16, 16′) zur Verwirbelung der Distanzelemente (11) eine weitere, ebenfalls geschlossene Kammer (15) vorgeschaltet ist, die zum einen über die Gaseinlaßöffung (23) mit der Kammer (16, 16′) verbunden ist und in die zum weiteren die Düse (18) der Gaszuleitung mündet.

7. Vorrichtung nach einem der Ansprüche 5 oder 6,
**dadurch gekennzeichnet,**
daß die Anordnung zur Aufnahme von Substraten ein Sockel (22) ist, in dem die Öffnungen (21) zum Auslaß des Gases angebracht sind.

8. Vorrichtung nach einem der Ansprüche 5 oder 6,
**dadurch gekennzeichnet,**
daß in der Kammer (16, 16′) zwischen der Anordnung zur Aufnahme von Substraten (2, 3) und dem Mikroporenfilter (19) ein Sieb (24) angeordnet ist.

9. Vorrichtung nach Anspruch 6,
**dadurch gekennzeichnet**,
daß die Kammer (16′) eine Vorkammer (25) aufweist, und daß die geschlossene Kammer (15) und die Kammer (16′) über die Vorkammer (25) miteinander verbunden sind.

10. Vorrichtung nach Anspruch 9,
**dadurch gekennzeichnet**,
daß der vom Gas durchströmte Querschnitt der Vorkammer (25) in Gasflußrichtung verjüngt ausgebildet ist.

## Claims

1. Method of applying spherical spacing elements (11) to a substrate (2; 3) of a liquid-crystal cell (1), in which the substrate (2; 3) is disposed horizontally at the base of a closed chamber (16; 16′), the spacing elements (11) are swirled up outside said chamber in a time-limited gas flow and the spacing elements (11) suspended in the gas flow are fed through an opening into the chamber (16, 16′) in which the substrate (2; 3) is disposed so that the spacing elements (11) suspended in the gas flow settle in a homogeneously distributed manner at the base of the chamber (16; 16′) and on the substrate (2; 3) after the gas flow is switched off, characterized in that, after they have been picked up by the gas flow and before they enter the chamber (16; 16′), the spacing elements (11) are passed, together with the gas flow, through a micropore filter (19) whose pore size is equivalent to about 1.5 - 2.8 times, preferably however 2.0 times, the diameter of the spacing elements (11).

2. Method of applying spherical spacing elements according to Claim 1, characterized in that the swirling of the spacing elements (11) takes place in a chamber (15), which is also closed, upstream of the chamber (16, 16′).

3. Method of applying spherical spacing elements according to Claim 2, characterized in that the pressure of the gas at which it is forced into the chamber (15) is at least 3 x 10⁵ pascals.

4. Method of applying spherical spacing elements according to one of Claims 1 to 3, characterized in that the gas flow lasts at least a few seconds.

5. Apparatus for applying spherical spacing elements (11) to a substrate of a liquid-crystal cell (1), comprising a chamber (16; 16′) which has a gas inlet, an opening for venting the gas and a device for receiving substrate plates (2; 3), and comprising, outside the chamber (16; 16′) and adjacent to the gas inlet, a device for swirling spacing elements (11), characterized in that a micropore filter (19) whose pore size is equivalent to about 1.5 - 2.8 times, preferably however 2.0 times, the diameter of the spacing elements (11) is disposed in the gas stream in which the spacing elements (11) are already swirled on the path to the opening (23) of the chamber (16, 16′), preferably immediately alongside the gas inlet opening (23).

6. Apparatus according to Claim 5, characterized in that there is upstream of the chamber (16, 16′) for swirling the spacing elements (11) a further chamber (15), also closed, which is, on the one hand, connected to the chamber (16, 16′) via the gas inlet opening (23) and into which, on the other hand, the nozzle (18) of the gas feed line opens.

7. Apparatus according to either of Claims 5 or 6, characterized in that the device for receiving substrates is a pedestal (22) in which openings (21) are provided for discharging the gas.

8. Apparatus according to either of Claims 5 or 6, characterized in that a sieve (24) is disposed in the chamber (16, 16′) between the device for receiving substrates (2, 3) and the micropore filter (19).

9. Apparatus according to Claim 6, characterized in that the chamber (16′) has a prechamber (25) and in that the closed chamber (15) and the chamber (16′) are connected together via the prechamber (25).

10. Apparatus according to Claim 9, characterized in that the cross section of the prechamber (25) through which the gas flows is designed to taper in the gas flow direction.

## Revendications

1. Procédé pour disposer des éléments d'espacement (11) sphériques sur un substrat (2 ; 3) d'une cellule à cristal liquide (1), dans lequel le substrat (2 ; 3) est disposé horizontalement sur le fond d'une chambre (16; 16′) fermée et on fait tourbillonner les éléments d'espacement (11) à l'extérieur de cette chambre dans un flux de gaz limité dans le temps et les éléments d'espacement (11) flottant dans le flux de gaz sont amenés par une ouverture dans la chambre (16, 16′) dans laquelle est disposé le substrat (2 ; 3) si bien que lorsque le flux de gaz est interrompu, les éléments d'espacement (11) flottant dans le flux de gaz se déposent sur le fond de la chambre (16 ; 16′) ainsi que sur le substrat (2 ; 3) en y étant répartis de manière homogène,
**caractérisé** par le fait
que les éléments d'espacement (11), après avoir été pris dans le flux de gaz, passent avec le flux de gaz, avant d'entrer dans la chambre (16, 16′) à travers un filtre microporeux (19) dont la grosseur des pores représente environ 1,5 à 2,8 fois, de préférence toutefois 2 fois, le diamètre des éléments d'espacement (11).

2. Procédé pour disposer des éléments d'espacement sphériques selon la revendication 1,
**caractérisé** par le fait
que l'on fait tourbillonner les éléments d'espacement (11) dans une chambre (15) également fermée et montée en amont de la chambre (16, 16′).

3. Procédé pour disposer des éléments d'espacement sphériques selon la revendication 2,
**caractérisé** par le fait
que la pression avec laquelle le gaz est pressé dans la chambre (15), est d'au moins 3 x 10⁵ pascals.

4. Procédé pour disposer des éléments d'espacement sphériques selon l'une des revendications 1 à 3,
**caractérisé** par le fait
que le flux de gaz dure au moins quelques secondes.

5. Dispositif pour disposer des éléments d'espacement (11) sphériques sur un substrat d'une cellule à cristal liquide (1), comprenant une chambre (16 ; 16′) qui comporte une entrée de gaz, un orifice d'évacuation du gaz et une structure destinée à recevoir des plaques de substrat (2 ; 3) ainsi qu'à l'extérieur de la chambre (16 ; 16′) et au voisinage de l'entrée de gaz, une structure pour faire tourbillonner des éléments d'espacement (11),
**caractérisé** par le fait
que dans le flux de gaz dans lequel les éléments d'espacement (11) tourbillonnent déjà, il est prévu sur le chemin vers l'orifice (23) de la chambre (16, 16′), de préférence directement sur l'orifice d'entrée de gaz (23), un filtre microporeux (19) dont la grosseur des pores représente environ 1,5 à 2,8 fois, de préférence toutefois 2 fois, le diamètre des éléments d'espacement (11).

6. Dispositif selon la revendication 5,
**caractérisé** par le fait
qu'en amont de la chambre (16, 16′) destinée à faire tourbillonner les éléments d'espacement (11), il est monté une autre chambre (15) également fermée qui d'une part est reliée à la chambre (16, 16′) par l'orifice d'entrée de gaz (23) et dans laquelle débouche d'autre part la tuyère (18) de l'amenée de gaz.

7. Dispositif selon l'une des revendications 5 ou 6,
**caractérisé** par le fait
que la structure destinée à recevoir des substrats est un socle (22) dans lequel sont ménagés les orifices (21) pour la sortie du gaz.

8. Dispositif selon l'une des revendications 5 ou 6,
**caractérisé** par le fait
qu'un tamis (24) est disposé dans la chambre (16, 16′), entre la structure destinée à recevoir des substrats (2, 3) et le filtre microporeux (19).

9. Dispositif selon la revendication 6,
**caractérisé** par le fait
que la chambre (16′) présente une pré-chambre (25) et que la chambre (15) fermée et la chambre (16′) communiquent par l'intermédiaire de la pré-chambre (25).

10. Dispositif selon la revendication 9,
**caractérisé** par le fait
que la section transversale parcourue par le gaz, de la pré-chambre (25) va en se rétrécissant dans la direction d'écoulement du gaz.
